# EUROPEAN PATENT SPECIFICATION

(11) **EP 3 538 426 B1**
(45) Date of publication and mention of the grant of the patent: **26.08.2020**
(21) Application number: 17817084.1
(22) Date of filing: 10.11.2017
(51) Int. Cl.: B63B 13/02, B63J 2/12, B63J 2/14

(54) **SEAWATER INTAKE RISER INTERFACE WITH VESSEL HULL**
MEERWASSEREINLASSSTEIGLEITUNGSSCHNITTSTELLE MIT SCHIFFSRUMPF
INTERFACE DE COLONNE MONTANTE D'ADMISSION D'EAU DE MER AVEC UNE COQUE DE NAVIRE

(30) Priority: 10.11.2016 US 201662420188 P
(43) Date of publication of application: 18.09.2019
(73) Proprietor: Single Buoy Moorings, Inc., 1723 Marly (CH)
(72) Inventor: ODORICO, Julien, Houston, TX 77077 (US); POLLACK, Jack, Camarillo, CA 93010 (US)
(74) Representative: Nederlandsch Octrooibureau
(86) International application number: PCT/IB2017/001498
(87) International publication number: WO 2018/087595

(56) References cited:
- WO-A1-03/006783
- WO-A1-2011/118228
- WO-A1-2016/144158
- US-A- 4 294 564

## Description

### BACKGROUND OF THE INVENTION

### 1. Field of the Invention.

The present invention generally relates to vessels for the offshore production of oil and gas. More particularly, it relates to the seawater intake riser (SWIR) commonly used on such vessels to access colder water than is available at or near the surface.

### 2. Description of the Related Art

A Seawater Intake Riser (SWIR) or Water Intake Riser (WIR) is a substantially vertical, hanging conduit for the offshore industry, designed specifically for Floating Production Units (e.g., FLNG, FPSO, etc). A seawater intake system provides a means for obtaining low oxygenated water for the cooling, process, utility and/or water injection systems to enhance processing efficiency. In the event a vessel needs to be relocated, the systems are preferably designed to be retrievable within 24 hours. WO 2016/144158 A1 discloses such a SWIR.

For example, the FLNG cooling process uses a large volume of cold seawater drawn from 500 - 3000 feet (152-914 m) below the sea surface utilizing several vertical risers (20-in. - 60-in. ID) (508 - 1524 mm) hanging from the vessel. These risers have requirements very different from catenary risers that are supported at hang-off and on the seabed.

The Floating Liquefied Natural Gas (FLNG) units require a large volume of cold seawater to boost the gas liquefaction process efficiency. In order to reach seawater sufficiently cold, seawater intake riser systems are typically 120 - 1000 meters long and designed for a minimum service life of 25 years.

At 160 meters below the sea surface, the water temperature is typically 10° C lower than at the surface and up to 16° C lower at a 320-meter water depth. At 1000 meters below the sea surface, the water temperature may even be as low as 5° C. These depths effectively set the required lengths for the water intake risers to enable an efficient LNG process.

In the past, the installation of SWIRs has required divers and support vessels to assemble and connect the SWIR to an offshore FPSO or FLNG vessel. The present invention provides an apparatus and method that avoids these limitations.

### BRIEF SUMMARY OF THE INVENTION

A structural interface according to the invention claimed between a Sea Water Intake Riser (SWIR) and the hull of a floating unit or a sump tank bottom plate permits a pull-in, diver-less installation of the SWIR. The embodiments include an integrated, easily maintainable strainer.

### BRIEF DESCRIPTION OF THE SEVERAL VIEWS OF THE DRAWING(S)

FIG. 1 is a cross-sectional view of an exemplary first embodiment of the invention.
FIG. 2A is a cross-sectional view of an exemplary second embodiment of the invention.
FIG. 2B is a cross-sectional view taken along line 2B - 2B in FIG. 2A.
FIG. 2C is a cross-sectional view taken along line 2C - 2C in FIG. 2A.
FIG. 3 is a side view, partially in cross-section of an exemplary third embodiment of the invention.
FIG. 4 is an enlarged view of a portion of FIG. 3 with a radial load transfer device shown in cross-section.
FIG. 5 is a cross-sectional view of the radial load transfer device of the embodiment shown in FIGS. 3 and 4.
FIG. 6 is a cross-sectional view taken along line 6 - 6 in FIG. 5.
FIG. 7 shows various angular dimensions of one particular embodiment of the radial load transfer device illustrated in FIG. 5.
FIG. 8 is a cross-sectional view of a pull-in head attached to a SWIR being drawn into a hull-mounted receiver in a floating vessel.
FIG. 9 is a cross-sectional view taken along line 9 - 9 in FIG. 8.
FIG. 10 is an enlarged, cross-sectional view of the interface between the pull-in head and receiver shown in FIG. 8.
FIGS. 11A - 11C sequentially illustrate the alignment which may occur during a SWIR pull-in operation according to a method of the invention.

### DETAILED DESCRIPTION OF THE INVENTION

A SWIR may comprise a long, substantially vertical pipe hung from a floating vessel. In certain embodiments, the lower portion (19) may be a polymer pipe such as high-density polyethylene (HDPE) pipe. A flex hose (18) or other similar flexible connection may connect the lower portion (19) of the SWIR to main body (1) of the SWIR interface. In particular exemplary embodiments of the invention illustrated in the drawing figures, the structural interface between a Sea Water Intake Riser (SWIR) and a floating unit hull or sump tank bottom plate may comprise the elements described below.

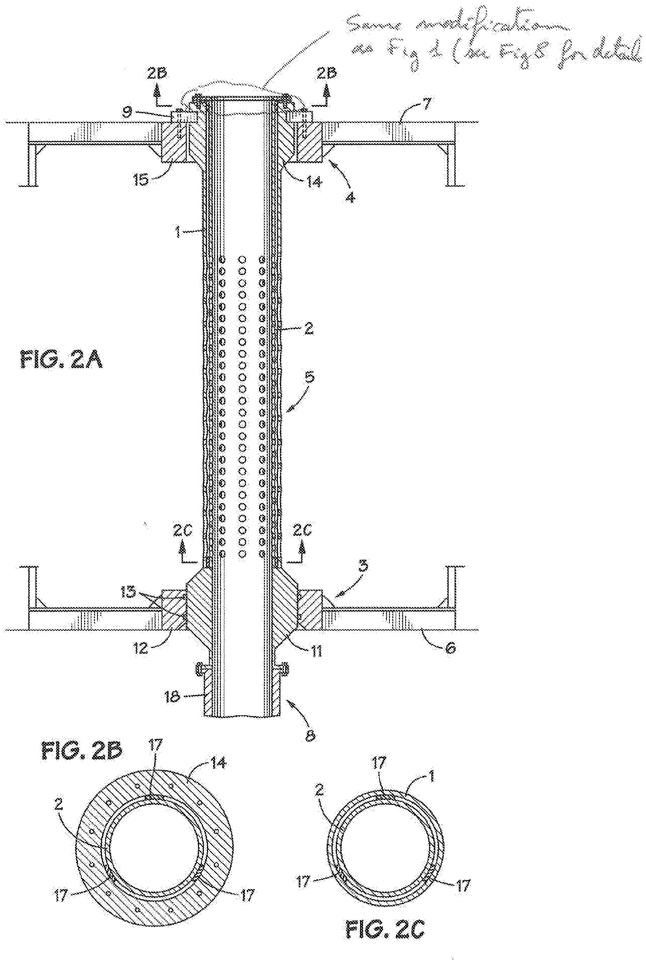

The SWIR (8) comprises a main cylindrical body (1) perforated in a lower portion (5) located immediately above the sealing device (3). In other embodiments, the perforations extend higher, even to the elevation of the hang-off device (4) [see FIG. 2A].

A cylindrical strainer (2) is coaxial with and inserted into main body (1). Compression fit tabs (17) may be fixed to the inner surface of the outer pipe to positon and hold the inner screen in spaced-apart relation. The strainer (2) may be perforated in the same way as the main body perforations (5) and may include an integrated flow-guiding device (16) configured to minimize the pressure drop through the strainer / main body perforations. The perforations may be extended up to the hang-off device (4). The strainer may be configured to slide into the main body of the structural interface after installation and may then be secured to the main body once into position. Two ring seals (10), one located below and the other above the strainer perforation, may be provided in the annulus to seal between the strainer and main body. In certain embodiments, the ring seals (10) may comprise one or more inflatable seals. In an embodiment, the inside diameter of the strainer (2) is equal to the inside diameter of the male portion (11) of the sealing device (3) so as to provide a smooth transition for the flow of water from the lower part of the SWIR to the perforated section thereof.

A sealing device (3) is located at the penetration with the floating unit hull or sump tank bottom plate (6). The sealing device may comprise two parts: male portion (11); and female portion (12). The male part may be welded to the structural interface main body. The female part may be welded to the hull or sump tank bottom plate. Two ring seals (13) may be located between the male and female bodies to provide a watertight seal between both parts after installation. In certain embodiments, the ring seals (13) may comprise one or more inflatable seals. In an embodiment, the outer diameter (OD) of male portion (11) is equal to or larger than the OD of male portion (14) of the hang off device (4).

A hang-off device (4) may be located at the penetration through the first horizontal hull-supporting structure (7) or sump tank main supporting structure that is located above the lower draft of the floating unit. In an embodiment, the hang-off device comprises three parts: a male part (14); a female part (15); and a split clamp (9). The male part may be welded to the structural interface main body. The female part may be welded to the hull or sump tank main supporting structure. The split clamp may be placed in position and bolted to the female part (15) at the end of a pull-in installation operation in order to secure the structural interface to the hull or sump tank.

A SWIR with a structural interface according to the invention provides the following advantages and benefits over the systems of the prior art:
- It makes possible a pull-in installation of the SWIR through the floating unit hull or sump tank bottom plate;
- Installation does not require diver intervention;
- The strainer may be integrated into the structural interface and therefore maintainable directly from the floating unit; and
- The SWIR exhaust may be integrated into the structural interface allowing the transfer of the seawater from the SWIR to a sump tank without additional devices.

A second, illustrative embodiment is shown in FIG. 2A. This embodiment has an inner screen with perforations that extend substantially along its full length and a correspondingly perforated section of main body 1. The top end of the screen may be closed or perforated in order to permit the flow of seawater when the vessel is operating at a lower draft and the top of the SWIR is below the waterline of the vessel.

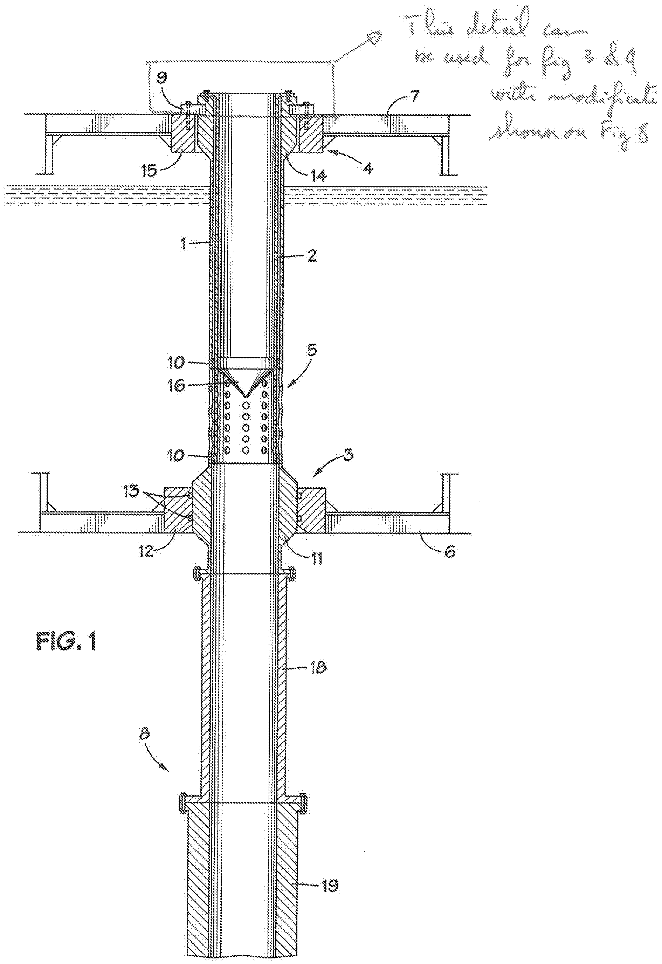

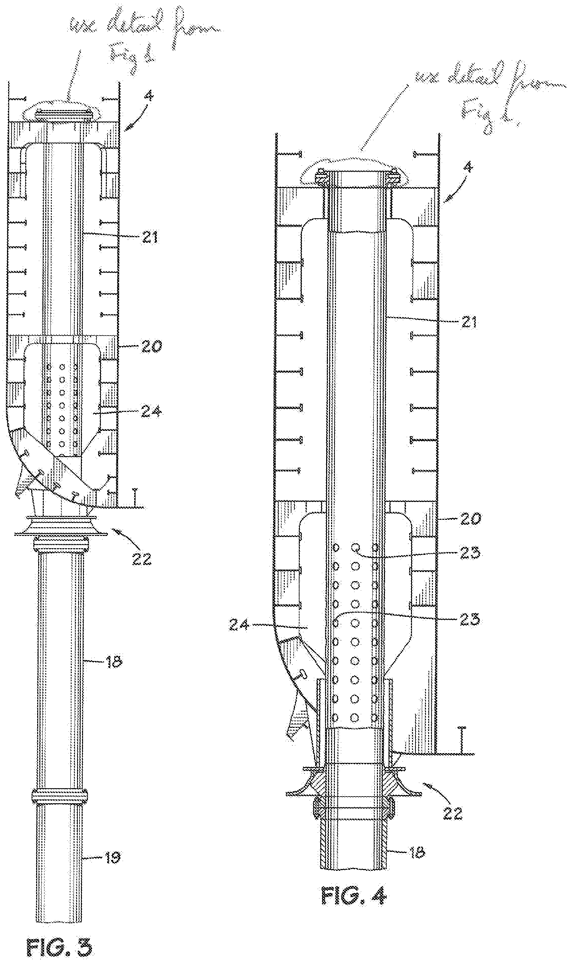

Referring now to the embodiment illustrated in FIGS. 3 - 7, interface pipe 21 is attached to hull structure 20 of a floating vessel having a tank 24 for receiving seawater from a SWIR. The vertical load of the SWIR may be borne by hang-off device 4 of the type described above in connection with the embodiments of FIGS. 1 and 2A. However, in this embodiment, radial loads on the SWIR (such as may be induced by currents or movement of the floating vessel) are reacted by radial load transfer device 22.

As shown in FIG. 4, perforations 23 in interface pipe 21 will admit seawater into tank 4 whenever the level of water in tank 24 is below the waterline of the vessel having hull structure 20.

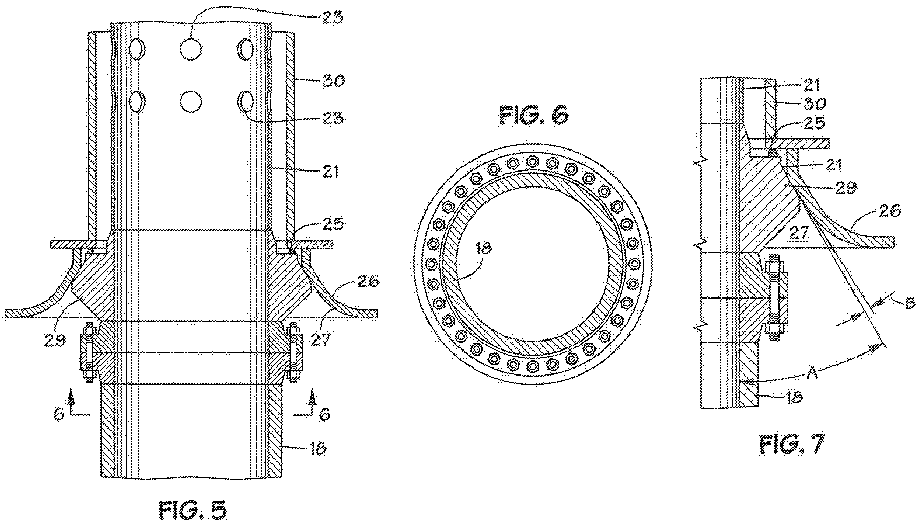

FIGS. 5 - 7 illustrate the details of radial load transfer device 22. One element of the SWIR interface is tubular receiver 30 which has a lower, flared portion 26 having inner tapered surface 27 which forms the female member of the interface. The male portion of the interface is radially enlarged portion 29 of interface pipe 21. Enlarged portion 29 has outer tapered surface 28 which engages tapered surface 27 when fully seated. This engagement may form a metal-to-metal seal sufficient to keep surface water from entering tank 24. Alternatively (or additionally), seal 25 may be provided between a shoulder on the upper end of radially enlarged portion 29 and a corresponding surface on the inside of receiver 30. In an embodiment, seal 25 is a bulb seal.

As illustrated in FIG. 7, it has been found that an angular clearance of 2.5 degrees at B helps to avoid interlocking of the mating conical faces 27 and 28 when the angle A is about 30 degrees.

A coating such as SERMAGARD® [Praxair Surface Technologies, 1500 Polco St. Indianapolis, Indiana 46222 USA] may be applied to selected surfaces of the SWIR interface for corrosion protection.

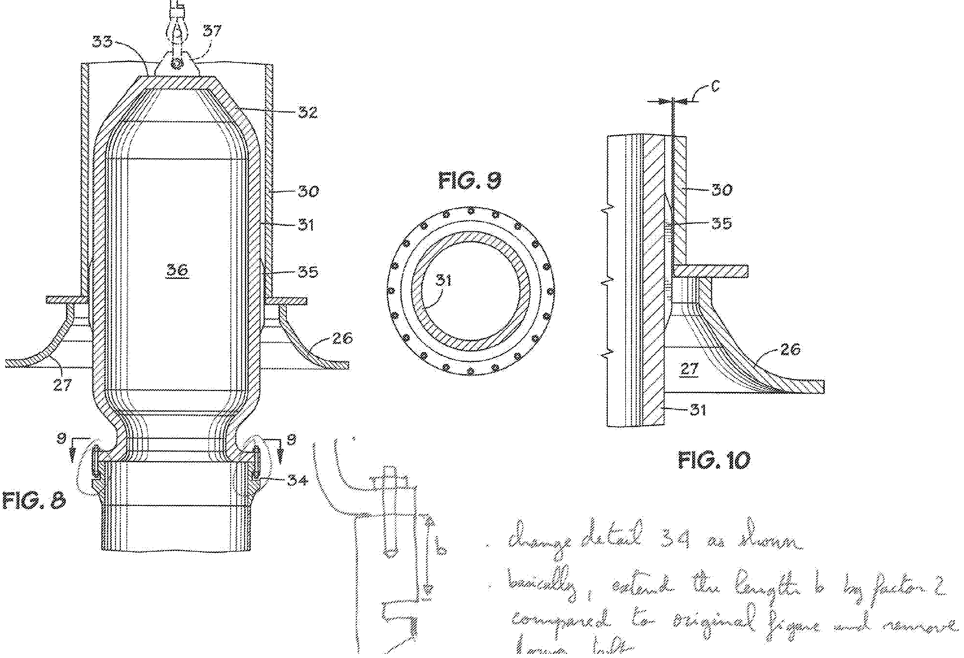

FIGS. 8 - 10 illustrate a pull-in head 31 attached to the upper end of a SWIR. The upper end 33 of pull-in head 31 may be equipped with a pad eye 37 or other means for attaching a line for pulling the SWIR into the receiver. Chamfered surface 32 may be provided to accommodate an initial axial misalignment of pull-in head 31 with receiver 30. The interior of pull-in head 30 forms chamber 36 which may be a buoyant chamber. During installation, pull-in head 31 may be raised to an elevation that permits split clamp 9 to be installed in groove 34 at which point pull-in head 31 may be removed from the SWIR.

Segmented alignment tabs 35 may be provided to center pull-in head 31 in receiver 30 while permitting water to escape out the bottom of receiver 30. Clearance C may be provided between the inner surface of receiver 30 and the outer surfaces of tabs 35.

In yet other embodiments (not shown) a cross-load bearing is fitted at the hull penetration and, inasmuch as it may comprise a rubber or elastomer layer compressed between pipe (11) and hull penetration (12), it may also act as the seal element (in view of the low pressure differential involved).

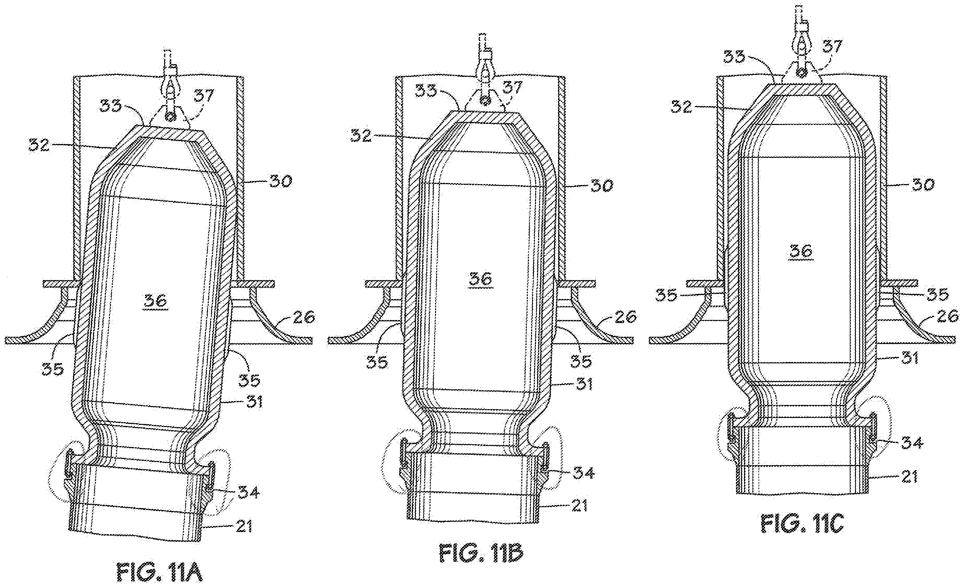

FIGS. 11A, 11B, and 11C sequentially illustrate the axial alignment that may occur when pull-in head 31 is raised in receiver 30.

The design of the hang-off device (4) shown in FIG. 1 may also be used in the embodiment illustrated in FIGS. 3 and 4. Similarly, pull-in head 31 shown in FIGS. 8 and 11A - 11C may attach to the upper end of interface pipe 21 using the same threaded bores as those shown in FIG. 1 for securing the upper flange on strainer 2 to main body 1.

A method for installing a SWIR on a floating vessel at an offshore location may comprise the following steps:

HDPE pipe 19 is mated to flex hose 18 and interface pipe 21 quayside or at a beach using bolted flanges or other means known in the art. In a protected area, a ballast tank (or multiple ballast tanks) may then be attached proximate the lower end of the SWIR. The resulting SWIR assembly may then be towed by one or more support vessels to the location of an FPSO or other receiving vessel. In an embodiment, towing is performed by two anchor handling vessels (AHV), one at each end of the assembly, to provide a higher degree of control of the floating SWIR assembly.

At the site of the offshore vessel, the ballast tanks may be progressively flooded to upend the SWIR. The attachment line is passed from the AHV connected to the upper end of the SWIR to a pull-in device on the FPSO (which may be an in-line winch or strand jack) for final pull-in and seating of the SWIR in the interface.

In the drawing figures, the following reference numbers are used:
- 1.: main body
- 2.: strainer
- 3.: sealing device
- 4.: hang-off device
- 5.: main body & strainer perforations
- 6.: hull or sump tank bottom plate
- 7.: first horizontal hull or sump tank main supporting structure immediately above the floating unit lower draft
- 8.: Sea Water Intake Riser (SWIR)
- 9.: split clamp
- 10.: ring seals
- 11.: sealing device (male part)
- 12.: sealing device (female part)
- 13.: ring seals
- 14.: hang-off device (male part)
- 15.: hang-off device (female part)
- 16.: flow guiding device (flow diverter)
- 17.: compression fit tabs
- 18.: flex hose
- 19.: HDPE pipe
- 20.: hull structure
- 21.: interface pipe
- 22.: radial load transfer device
- 23.: perforations
- 24.: tank
- 25.: seal
- 26.: flared portion of receiver (female member)
- 27.: inner tapered surface
- 28.: outer tapered surface
- 29.: radially enlarged portion of 21 (male member)
- 30.: receiver
- 31.: pull-in head
- 32.: chamfered surface
- 33.: upper end
- 34.: groove for split clamp
- 35.: segmented alignment tabs
- 36.: chamber
- 37.: pad eye

The foregoing presents particular embodiments of a system embodying the principles of the invention. Those skilled in the art will be able to devise alternatives and variations which, even if not explicitly disclosed herein, embody those principles and are thus within the scope of the invention. Although particular embodiments of the present invention have been shown and described, they are not intended to limit what this patent covers. One skilled in the art will understand that various changes and modifications may be made without departing from the scope of the present invention as literally and equivalently covered by the following claims.

## Claims

1. A structural interface between a Seawater Intake Riser (SWIR) and the hull or sump tank bottom plate of a floating vessel comprising:
a main cylindrical body (1) perforated in a lower portion (5) located above a sealing device (3);
a cylindrical strainer (2) that is coaxial with and inserted into the main body (1);
a first annular seal (10) located below a perforated section of the strainer in the annulus between the main body and the strainer;
a second annular seal (10') located above a perforated section of the strainer in the annulus between the main body and the strainer;
a sealing device (3) designed to be
located at a penetration in the vessel hull (6) or sump tank bottom plate, the sealing device comprising a male portion (11) and female portion (12);
at least one ring seal (13) located between the male and female portions configured to provide a watertight seal between the male portion and the female portion;
a hang-off device (4) designed to be
located at a penetration through a first horizontal hull-supporting structure (7) that is located above the lower draft of the vessel, the hang-off device comprising a male part (14), a female part (15) and a split clamp (9);
wherein the above elements are sized and configured to permit the SWIR to be pulled into the penetration with the vessel hull (6) or sump tank bottom plate from below the hull or sump tank bottom plate and into engagement with the female part (15) of the hang-off device (4).

2. The structural interface recited in claim 1 wherein the perforated lower portion (5) is proximate the sealing device (3).

3. The structural interface recited in claim 1 wherein the perforated portion (5) of the main cylindrical body (1) extends to an upper location proximate the hang-off device (4), the structural interface preferably further comprising a perforated top plate on the cylindrical strainer (2).

4. The structural interface recited in claim 1 further comprising a flow diverter (16), preferably wherein the flow diverter comprises a substantially conical surface configured to direct water flowing up in the SWIR towards the perforations in the lower section (5).

5. The structural interface recited in claim 1 wherein the strainer (2) is sized and configured for sliding installation in the main cylindrical body (1) and has an inside diameter substantially equal to the inside diameter of the male portion (11) of the sealing device (3).

6. The structural interface recited in claim 1 further comprising a plurality of compression fit tabs (17) on the inner surface of the main cylindrical body (1) sized and configured to hold the strainer (2) in spaced-apart relation to the main cylindrical body.

7. The structural interface recited in claim 1 wherein the at least one ring seal (13) is an inflatable seal and/or wherein at least one of the first annular seal (10) and second annular seal (10') is an inflatable seal.

8. The structural interface recited in claim 1 wherein the outside diameter of the male portion (11) of the sealing device (3) is larger than the outside diameter of the male portion (14) of the hang-off device (4).

9. The structural interface recited in claim 1 wherein the strainer is integrated in the structural interface.

10. A method of installing a Sea Water Intake Riser (SWIR) on an offshore floating vessel comprising:
mating a HDPE pipe (19) to a flex hose (18) and an interface pipe (21) quayside or at a beach;
attaching one or more ballast tanks proximate the lower end of the SWIR;
attaching a pull-in head to an upper end of the SWIR to form a SWIR assembly;
towing the SWIR assembly to the location of the offshore floating vessel;
upending the SWIR proximate the offshore vessel by progressively flooding the ballast tanks;
passing an attachment line connected to the upper end of the SWIR from a support vessel to a pull-in device on the floating vessel equipped with a structural interface according to claim 1; and
seating the SWIR in the interface.

11. A structural interface between a Seawater Intake Riser (SWIR) and the hull or sump tank bottom plate of a floating vessel comprising:
a radial load transferring device (22);
an interface pipe (21) perforated in a lower portion located above the radial load transferring device (22);
a hang-off device (4) designed to be
located at a penetration through a first horizontal hull-supporting structure (7) that is located above the lower draft of the vessel, the hang-off device comprising: a male part (14), a female part (15) and a split clamp (9),
wherein the above elements are sized and configured to permit the SWIR to be pulled into the vessel hull (6) from below the hull or sump tank bottom plate and through the radial load transferring device, and
wherein the structural interface further comprises a cylindrical strainer (2) that is coaxial with and inserted into the interface pipe (21).

12. The structural interface recited in claim 11 wherein the radial load transferring device comprises a first substantially conical surface attached to the hull or sump tank bottom plate of the floating vessel and a second substantially conical surface on a radially extending portion of the interface pipe (21), preferably wherein the first substantially conical surface and the second substantially conical surface form a metal-to-metal seal when the interface pipe (21) is seated in the radial load transferring device.

13. The structural interface recited in claim 11 wherein the radial load transferring device reacts side loads imposed on the SWIR to the hull or sump tank bottom plate of the floating vessel.

14. The structural interface recited in claim 11 further comprising a seal (25) between the interface pipe (21) and the receiver (30).

15. The structural interface recited in claim 12 wherein the first substantially conical surface and the second substantially conical surface have an angular clearance of about 2.5 degrees.

## Patentansprüche

1. Eine strukturelle Schnittstelle zwischen einer Steigleitung zur Aufnahme von Meerwasser (SWIR) und dem Rumpf oder der Bodenplatte des Sumpftanks eines schwimmenden Schiffes, umfassend:
einen zylindrischen Hauptkörper (1), der in einem unteren Abschnitt (5), der sich über einer Dichtungsvorrichtung (3) befindet, perforiert ist;
ein zylindrischer Abscheider (2), der koaxial mit dem Hauptkörper (1) angeordnet und in diesen eingesetzt ist;
eine erste ringförmige Dichtung (10), die unterhalb eines perforierten Abschnitts des Abscheiders in dem Ringraum zwischen dem Hauptkörper und dem Abscheider angeordnet ist;
eine zweite ringförmige Dichtung (10'), die oberhalb eines perforierten Abschnitts des Abscheiders in dem Ringraum zwischen dem Hauptkörper und dem Abscheider angeordnet ist;
eine Dichtungsvorrichtung (3), die dazu ausgelegt ist, an einer Durchdringung im Schiffsrumpf (6) oder in der Bodenplatte des Sumpftanks angeordnet zu werden, wobei die Dichtungsvorrichtung einen männlichen Abschnitt (11) und weiblichen Abschnitt (12) aufweist;
mindestens eine Ringdichtung (13), die zwischen dem männlichen und dem weiblichen Abschnitt angeordnet und dazu ausgebildet ist, eine wasserdichte Abdichtung zwischen dem männlichen Abschnitt und dem weiblichen Abschnitt zu bilden;
eine Abhängevorrichtung (4), die dazu ausgelegt ist, an einer Durchdringung durch eine erste horizontale Rumpfstützstruktur (7) angeordnet zu sein, die sich über dem unteren Tiefgang des Schiffes befindet, wobei die Aufhängevorrichtung einen männlichen Teil (14), einen weiblichen Teil (15) und eine geteilte Klemme (9) umfasst;
wobei die obigen Elemente so bemessen und dazu ausgebildet sind, dass die SWIR von unterhalb des Schiffsrumpfes oder der Bodenplatte des Sumpftanks in die Durchdringung des Schiffsrumpfs (6) oder der Bodenplatte des Sumpftanks und in Eingriff mit dem weiblichen Abschnitt (15) der Abhängevorrichtung (4) gezogen werden kann.

2. Strukturelle Schnittstelle nach Anspruch 1, wobei der perforierte untere Abschnitt (5) sich in der Nähe der Dichtungsvorrichtung (3) befindet.

3. Strukturelle Schnittstelle nach Anspruch 1, wobei der perforierte Abschnitt (5) des zylindrischen Hauptkörpers (1) sich bis zu einer oberen Stelle in der Nähe der Aufhängevorrichtung (4) erstreckt, wobei die strukturelle Schnittstelle bevorzugt weiterhin eine perforierte Deckplatte auf dem zylindrischen Abscheider (2) aufweist.

4. Strukturelle Schnittstelle nach Anspruch 1, mit einem Strömungsumlenker (16), wobei der Strömungsumlenker bevorzugt eine im Wesentlichen konische Oberfläche aufweist, die dazu ausgebildet ist, in der SWIR aufwärts fließendes Wasser zu den Perforationen im unteren Abschnitt (5) zu lenken.

5. Strukturelle Schnittstelle nach Anspruch 1, wobei der Abscheider (2) zum gleitenden Einbau in den zylindrischen Hauptkörper (1) bemessen und ausgebildet ist und einen Innendurchmesser aufweist, der im Wesentlichen gleich dem Innendurchmesser des männlichen Abschnitts (11) der Dichtungsvorrichtung (3) ist.

6. Strukturelle Schnittstelle nach Anspruch 1, mit einer Vielzahl von Presspassungslaschen (17) auf der Innenfläche des zylindrischen Hauptkörpers (1) umfasst, die so bemessen und dazu ausgebildet sind, den Abscheider (2) bezüglich des zylindrischen Hauptkörpers beabstandet zu halten.

7. Strukturelle Schnittstelle nach Anspruch 1, wobei die mindestens eine Ringdichtung (13) eine aufblasbare Dichtung ist und/oder wobei die erste ringförmige Dichtung (10) und/oder die zweite ringförmige Dichtung (10') eine aufblasbare Dichtung ist.

8. Strukturelle Schnittstelle nach Anspruch 1, wobei der Außendurchmesser des männlichen Abschnitts (11) der Dichtungsvorrichtung (3) größer ist als der Außendurchmesser des männlichen Abschnitts (14) der Aufhängevorrichtung (4).

9. Strukturelle Schnittstelle nach Anspruch 1, wobei der Abscheider in die strukturelle Schnittstelle integriert ist.

10. Ein Verfahren zum Installieren einer Steigleitung zur Aufnahme von Meerwasser (SWIR) auf einem schwimmenden Offshore-Schiff, umfassend:
Zusammenfügen eines HDPE-Rohrs (19) mit einem flexiblen Schlauch (18) und einem Schnittstellenrohr (21) am Kai oder an einem Strand;
Anbringen eines oder mehrerer Ballasttanks in der Nähe des unteren Endes der SWIR;
Anbringen eines Einziehkopfes an einem oberen Ende der SWIR, um eine SWIR-Baugruppe zu bilden;
Schleppen der SWIR-Baugruppe an den Standort des schwimmenden Offshore-Schiffes;
Aufrichten der SWIR in der Nähe des Offshore-Schiffes durch allmähliches Fluten der Ballasttanks;
Durchführen einer mit dem oberen Ende der SWIR verbundenen Befestigungsleine von einem Trägerschiff zu einer Einziehvorrichtung auf dem schwimmenden Schiff, das mit einer strukturellen Schnittstelle nach Anspruch 1 ausgerüstet ist; und
Platzierung der SWIR in der Schnittstelle.

11. Strukturelle Schnittstelle zwischen einer Steigleitung zur Aufnahme von Meerwasser (SWIR) und dem Rumpf oder der Bodenplatte des Sumpftanks eines schwimmenden Schiffes, umfassend:
eine Radialkraftübertragungsvorrichtung (22);
ein Schnittstellenrohr (21), das in einem unteren Abschnitt perforiert ist, der sich oberhalb der Radialkraftübertragungsvorrichtung (22) befindet;
eine Abhängevorrichtung (4), die dazu ausgelegt ist, an einer Durchdringung durch eine erste horizontale Rumpfstützstruktur (7) angeordnet zu werden, die sich über dem unteren Tiefgang des Schiffes befindet, wobei die Abhängevorrichtung umfasst: einen männlichen Teil (14), einen weiblichen Teil (15) und eine geteilte Klemme (9),
wobei die obigen Elemente so bemessen und ausgebildet sind, dass die SWIR von unterhalb des Rumpfes oder der Bodenplatte des Sumpftanks und durch die Radialkraftübertragungsvorrichtung in den Schiffsrumpf (6) gezogen werden kann, und
wobei die strukturelle Schnittstelle ferner einen zylindrischen Abscheider (2) umfasst der koaxial zu dem Schnittstellenrohr (21) angeordnet und in dieses eingesetzt ist.

12. Strukturelle Schnittstelle nach Anspruch 11, wobei die Radialkraftübertragungsvorrichtung eine erste im Wesentlichen konische Oberfläche, die an dem Rumpf oder der Bodenplatte des Sumpftanks des schwimmenden Schiffes befestigt ist, und eine zweite im Wesentlichen konische Oberfläche an einem sich radial erstreckenden Abschnitt des Schnittstellenrohres (21) umfasst, wobei bevorzugt die erste im Wesentlichen konische Oberfläche und die zweite im Wesentlichen konische Oberfläche eine Metall-auf-Metall-Dichtung bilden, wenn das Schnittstellenrohr (21) in der Radialkraftübertragungsvorrichtung sitzt.

13. Strukturelle Schnittstelle nach Anspruch 11, wobei die Radialkraftübertragungsvorrichtung auf seitliche Lasten, die auf die SWIR wirken, auf den Rumpf oder die Bodenplatte des Sumpftanks des schwimmenden Schiffes reagiert.

14. Strukturelle Schnittstelle nach Anspruch 11, wobei die strukturelle Schnittstelle ferner eine Dichtung (25) zwischen dem Schnittstellenrohr (21) und der Aufnahme (30) aufweist.

15. Strukturelle Schnittstelle nach Anspruch 12, wobei die erste im Wesentlichen konische Oberfläche und die zweite im Wesentlichen konische Oberfläche ein Winkelspiel von etwa 2,5 Grad aufweisen.

## Revendications

1. Interface structurelle entre une colonne montante de prise d'eau de mer (SWIR) et la coque ou la plaque de fond de réservoir de puisard d'un navire flottant, comprenant :
un corps principal (1) cylindrique perforé dans une partie inférieure (5) positionnée au-dessus d'un dispositif d'étanchéité (3) ;
une crépine (2) cylindrique qui est coaxiale avec et insérée dans le corps principal (1) ;
un premier joint annulaire (10) positionné au-dessous d'une section perforée de la crépine dans l'espace annulaire entre le corps principal et la crépine ;
un second joint annulaire (10') positionné au-dessous d'une section perforée de la crépine dans l'espace annulaire entre le corps principal et la crépine ;
un dispositif d'étanchéité (3) conçu pour être situé au niveau d'une pénétration dans la coque de navire (6) ou la plaque de fond de réservoir de puisard, le dispositif d'étanchéité comprenant une partie mâle (11) et une partie femelle (12) ;
au moins un joint annulaire (13) positionné entre les parties mâle et femelle, configuré pour fournir un joint étanche à l'eau entre la partie mâle et la partie femelle ;
un dispositif de suspension (4) conçu pour être positionné au niveau d'une pénétration à travers une première structure de support de coque horizontale (7) qui est positionnée au-dessus du tirant d'eau inférieur du navire, le dispositif de suspension comprenant une partie mâle (14), une partie femelle (15) et une pince fendue (9) ;
dans lequel les éléments ci-dessus sont dimensionnés et configurés pour permettre à la SWIR d'être tirée dans la pénétration avec la coque de navire (6) ou la plaque de fond de réservoir de puisard par dessous la coque ou la plaque de fond de réservoir de puisard et en prise avec la partie femelle (15) du dispositif de suspension (4).

2. Interface structurelle selon la revendication 1, dans laquelle la partie inférieure (5) perforée est à proximité du dispositif d'étanchéité (3).

3. Interface structurelle selon la revendication 1, dans laquelle la partie (5) perforée du corps principal (1) cylindrique s'étend jusqu'à un emplacement supérieur à proximité du dispositif de suspension (4), l'interface structurelle comprenant de préférence en outre une plaque supérieure perforée sur la crépine (2) cylindrique.

4. Interface structurelle selon la revendication 1, comprenant en outre un dispositif de déviation d'écoulement (16), de préférence dans lequel le dispositif de déviation d'écoulement comprend une surface sensiblement conique configurée pour diriger de l'eau s'écoulant vers le haut dans la SWIR vers les perforations dans la partie inférieure (5).

5. Interface structurelle selon la revendication 1, dans laquelle la crépine (2) est dimensionnée et configurée pour une installation coulissante dans le corps principal (1) cylindrique et a un diamètre intérieur sensiblement égal au diamètre intérieur de la partie mâle (11) du dispositif d'étanchéité (3).

6. Interface structurelle selon la revendication 1, comprenant en outre une pluralité de languettes d'ajustement par compression (17) sur la surface intérieure du corps principal (1) cylindrique, dimensionnées et configurées pour maintenir la crépine (2) dans une relation espacée par rapport au corps cylindrique principal.

7. Interface structurelle selon la revendication 1, dans laquelle le au moins un joint annulaire (13) est un joint gonflable et/ou dans lequel au moins l'un du premier joint annulaire (10) et du second joint annulaire (10') est un joint gonflable.

8. Interface structurelle selon la revendication 1, dans laquelle le diamètre extérieur de la partie mâle (11) du dispositif d'étanchéité (3) est supérieur au diamètre extérieur de la partie mâle (14) du dispositif de suspension (4).

9. Interface structurelle selon la revendication 1, dans laquelle la crépine est intégrée dans l'interface structurelle.

10. Procédé d'installation d'une colonne montante de prise d'eau de mer (SWIR) sur un navire flottant offshore, comprenant les étapes consistant à :
apparier un tuyau en HDPE (19) à un tuyau flexible (18) et un tuyau d'interface (21) à quai ou sur une plage ;
fixer une ou plusieurs citernes de ballast à proximité de l'extrémité inférieure de la SWIR ;
fixer une tête de traction à une extrémité supérieure de la SWIR pour former un ensemble de SWIR ;
remorquer l'ensemble de SWIR jusqu'à l'emplacement du navire flottant offshore ;
relever la SWIR à proximité du navire offshore en inondant progressivement les citernes de ballast ;
faire passer une ligne de fixation reliée à l'extrémité supérieure de la SWIR d'un navire de support à un dispositif de traction sur le navire flottant équipé d'une interface structurelle selon la revendication 1 ; et
loger la SWIR dans l'interface.

11. Interface structurelle entre une colonne montante de prise d'eau de mer (SWIR) et la coque ou la plaque de fond de réservoir de puisard d'un navire flottant, comprenant :
un dispositif de transfert de charge radiale (22) ;
un tuyau d'interface (21) perforé dans une partie inférieure positionnée au-dessus du dispositif de transfert de charge radiale (22) ;
un dispositif de suspension (4) conçu pour être positionné au niveau d'une pénétration à travers une première structure de support de coque horizontale (7) qui est positionnée au-dessus du tirant d'eau inférieur du navire, le dispositif de suspension comprenant une partie mâle (14), une partie femelle (15) et une pince fendue (9),
dans laquelle les éléments ci-dessus sont dimensionnés et configurés pour permettre à la SWIR d'être tirée dans la coque de navire (6) par le dessous de la coque ou la plaque de fond de réservoir de puisard et à travers le dispositif de transfert de charge radiale, et
où l'interface structurelle comprend en outre une crépine cylindrique (2) qui est coaxiale avec et insérée dans le tuyau d'interface (21).

12. Interface structurelle selon la revendication 11, dans laquelle le dispositif de transfert de charge radiale comprend une première surface sensiblement conique fixée à la coque ou la plaque de fond de réservoir de puisard du navire flottant et une seconde surface sensiblement conique sur une partie du tuyau d'interface (21) s'étendant radialement, de préférence dans laquelle la première surface sensiblement conique et la seconde surface sensiblement conique forment un joint métal sur métal lorsque le tuyau d'interface (21) est logé dans le dispositif de transfert de charge radiale.

13. Interface structurelle selon la revendication 11, dans laquelle le dispositif de transfert de charge radiale réagit à des charges latérales imposées sur la SWIR à la coque ou la plaque de fond de réservoir de puisard du navire flottant.

14. Interface structurelle selon la revendication 11, comprenant en outre un joint (25) entre le tuyau d'interface (21) et le récepteur (30).

15. Interface structurelle selon la revendication 12, dans laquelle la première surface sensiblement conique et la seconde surface sensiblement conique ont un jeu angulaire d'environ 2,5 degrés.
